# EUROPÄISCHE PATENTANMELDUNG

(11) **EP 3 566 582 A1**
(43) Veröffentlichungstag der Anmeldung: **13.11.2019**
(21) Anmeldenummer: 19173253.6
(22) Anmeldetag: 08.05.2019
(51) Int. Cl.: A21C 9/06, A21C 11/02

(54) **VORRICHTUNG ZUR HERSTELLUNG VON TEIGTASCHEN**

(30) Priorität: 08.05.2018 DE 202018102556 U
(71) Anmelder: Gün, Hanna, 33334 Gütersloh (DE)
(72) Erfinder: Gün, Hanna, 33334 Gütersloh (DE)
(74) Vertreter: Ter Meer Steinmeister & Partner

(57) **Zusammenfassung**

Die Erfindung betrifft eine Vorrichtung (10) zur Herstellung von Teigtaschen, umfassend ein erstes Werkzeug (12) und ein zweites Werkzeug (14), die jeweils eine Auskehlung (22) aufweisen und durch ein erstes Scharnier (16) aufeinander klappbar verbunden sind, **gekennzeichnet** durch ein drittes Werkzeug (18), das eine Aufwölbung (26) aufweist, die von der Auskehlung (22) aufgenommen wird, wenn das dritte Werkzeug (18) auf das erste Werkzeug (12) abgesenkt wird.

## Beschreibung

Die vorliegende Erfindung betrifft eine Vorrichtung zur Herstellung von Teigtaschen.

Teigtaschen sind eine Spezialität, die in den Küchen unterschiedlicher Kulturen vorkommt und demnach auch unterschiedlich bezeichnet wird, so etwa als Kutle, Tortellini, Maultauschen oder dergleichen mehr. Die Taschen können aus unterschiedlichen Teigen und mit verschiedenen Füllungen hergestellt werden.

Vorrichtungen zur Bildung der Taschen sind an sich bekannt. Die gattungsgemäße Vorrichtung umfasst zwei Werkzeuge, die im Folgenden als erstes Werkzeug und zweites Werkzeug bezeichnet werden sollen und durch ein Scharnier gelenkig miteinander verbunden sind. Die Werkzeuge weisen jeweils eine Auskehlung auf, also einen konkaven Hohlraum. In diesen wird zunächst eine Teigschicht eingearbeitet. Anschließend wird die Füllung eingebracht, und die beiden Werkzeuge werden aufeinander geklappt. Auf diese Weise werden die beiden Teigschichten in den Werkzeugen an deren Rändern miteinander verpresst und es entsteht eine geschlossene Teigtasche.

Für das Gelingen der Teigtaschen in bester Qualität ist es erwünscht, dass die Teigschicht in die Auskehlungen mit einer geeigneten Dicke eingearbeitet wird. Dies geschieht gewöhnlich mit den Fingern oder den Handknöcheln und erfordert viel Geschick und Erfahrung. Während die äußere Form der Teigtaschen durch die Form der Werkzeuge weitgehend vorgegeben ist, kann es passieren, dass die Teigschicht zu dünn oder zu dick gerät. Werden mehrere Teigtaschen hergestellt, ist es überdies erwünscht, dass diese gleichförmige Teigdicken aufweisen, damit sie in einem anschließenden Zubereitungsvorgang gleichmäßig gegart werden.

Erwünscht ist daher, die vorstehend beschriebene Vorrichtung so zu verbessern, dass in den Auskehlungen der Werkzeuge eine Teigschicht mit gewünschter Dicke auch von unerfahrenen Personen hergestellt werden kann. Die Dicke der Teigschicht soll zudem bei der Herstellung mehrerer Teigtaschen reproduzierbar sein.

Diese Aufgabe wird erfindungsgemäß durch eine Vorrichtung mit den Merkmalen des Anspruchs 1 gelöst.

Die erfindungsgemäße Vorrichtung umfasst zusätzlich ein drittes Werkzeug, das mit einer Aufwölbung versehen ist. Wird das dritte Werkzeug auf das erste Werkzeug abgesenkt, wird die Aufwölbung von der Auskehlung des ersten Werkzeugs aufgenommen. Eine Teigmasse, die zuvor in diese Auskehlung eingebracht worden ist, wird durch die Aufwölbung in die Auskehlung eingepresst und verteilt sich in dem Zwischenraum zwischen der Auskehlung und der Aufwölbung. Anschließend wird das dritte Werkzeug wieder angehoben und aus dem ersten Werkzeug entfernt. Die mit Teig ausgekleidete Auskehlung des ersten Werkzeugs kann dann mit der vorgesehenen Füllung der Teigtasche gefüllt werden, und das zweite Werkzeug wird auf das erste Werkzeug geklappt.

Das dritte Werkzeug dient somit als Hilfsmittel, um die Teigmasse im ersten Werkzeug zu verteilen und in der gewünschten Dicke auszuformen. Die Dicke ist bei allen Teigtaschen identisch, die mit derselben Vorrichtung geformt werden.

Vorzugsweise ist das dritte Werkzeug mit dem ersten Werkzeug durch zumindest ein zweites Scharnier klappbar verbunden oder zu verbinden. Die letztgenannte Alternative soll Ausführungsformen einschließen, in welchen das zweite Scharnier mehrere zueinander kompatible Scharnierteile aufweist, die zur Bildung des Scharniers aneinander an- oder ineinander eingreifen. Durch dieses zweite Scharnier lässt sich das dritte Werkzeug auf das erste Werkzeug klappen, wenn das erste Werkzeug und das zweite Werkzeug geöffnet sind. Mehrere zweite Scharniere können eine gemeinsame Scharnierachse aufweisen.

Gemäß einer bevorzugten Ausführungsform der vorliegenden Erfindung weist das zweite Scharnier, welches das dritte Werkzeug mit dem ersten Werkzeug verbindet, zwei voneinander lösbare Scharnierteile auf, von denen ein erstes Scharnierteil am dritten Werkzeug und ein zweites Scharnierteil am ersten Werkzeug angebracht ist.

Vorzugsweise weist jeweils eines dieser ersten und zweiten Scharnierteile einen Haken auf, und das jeweils andere Scharnierteil umfasst eine Scharnierachse, in die der Haken einhakbar ist. Durch dieses Einhaken wird das vollständige zweite Scharnier gebildet. Das Lösen des dritten Werkzeugs vom ersten Werkzeug geschieht durch einfaches Aushaken, so dass das dritte Werkzeug vollständig abnehmbar ist.

Weiter vorzugsweise umfasst das zweite Werkzeug ein drittes Scharnierteil, das sich mit dem ersten Scharnierteil zur Bildung eines dritten Scharniers lösbar verbinden lässt. In diesem Fall lässt sich der erste Scharnierteil, der am dritten Werkzeug angebracht ist, wahlweise am ersten Werkzeug oder am zweiten Werkzeug anbringen. Bei dieser Ausführungsform dient das dritte Werkzeug auch zur Ausformung einer gleichförmigen Teigschicht im zweiten Werkzeug, nämlich durch Schwenken des dritten Werkzeugs mittels des dritten Scharniers gegenüber dem zweiten Werkzeug und Absenken seiner Aufwölbung in die Auskehlung des zweiten Werkzeugs. Dieser Vorgang ist der Gleiche, wie oben anhand des ersten Werkzeugs beschrieben. Es lassen sich somit sowohl im ersten Werkzeug als auch im zweiten Werkzeug Teigschichten gleichförmiger Dicke und Verwendung des dritten Werkzeugs erzielen.

Gemäß einer bevorzugten Ausführungsform sind das zweite Scharnierteil und das dritte Scharnierteil identisch ausgebildet.

Weiter vorzugsweise sind das erste Werkzeug und das zweite Werkzeug identisch ausgebildet. Dies bietet Vorteile bei der Herstellung dieser Werkzeuge, da diese durch identische Formen und Werkzeuge kostensparend hergestellt werden können.

Weiter vorzugsweise weist die Aufwölbung eine Form auf, die der Auskehlung des ersten Werkzeugs entspricht, jedoch kleiner bemessen ist, so dass sie in der Stellung, in welcher das dritte Werkzeug auf das erste Werkzeug geklappt ist, von der Auskehlung des ersten Werkzeugs aufgenommen wird und zwischen der Aufwölbung und der Auskehlung ein Zwischenraum verbleibt.

Dieser Zwischenraum weist vorzugsweise eine gleichmäßige Höhe auf. Hierdurch wird eine homogene Dicke der Teigschicht erreicht.

Weiter vorzugsweise ist die Auskehlung des ersten Werkzeugs und/oder die Auskehlung des zweiten Werkzeugs von einem Pressrand umgeben. Dieser fördert einen Halt der miteinander zu verpressenden Teigschichten beim Schließen der Teigtasche. Überschüssiger Teig quillt außen aus den zusammengefügten ersten und zweiten Werkzeugen heraus und kann zur Bildung einer weiteren Teigtasche wiederverwendet werden.

Weiter vorzugsweise umfasst das dritte Werkzeug zwei Aufwölbungen, die von den Auskehlungen des ersten Werkzeugs und des zweiten Werkzeugs aufgenommen werden, wenn das dritte Werkzeug auf das erste Werkzeug und das zweite Werkzeug in der geöffneten Stellung des ersten Werkzeugs und des zweiten Werkzeugs abgesenkt wird. Auf diese Weise kann die Teigmasse in einem einzigen Arbeitsgang, nämlich durch Absenken des dritten Werkzeugs auf das erste und das zweite Werkzeug, in den beiden Auskehlungen verteilt werden.

Im Folgenden werden bevorzugte Ausführungsformen der vorliegenden Erfindung anhand der Zeichnung näher erläutert.
- Fig. 1 bis 6: sind verschiedene Ansichten einer Ausführungsform der erfindungsgemäßen Vorrichtung zur Herstellung von Teigtaschen; und

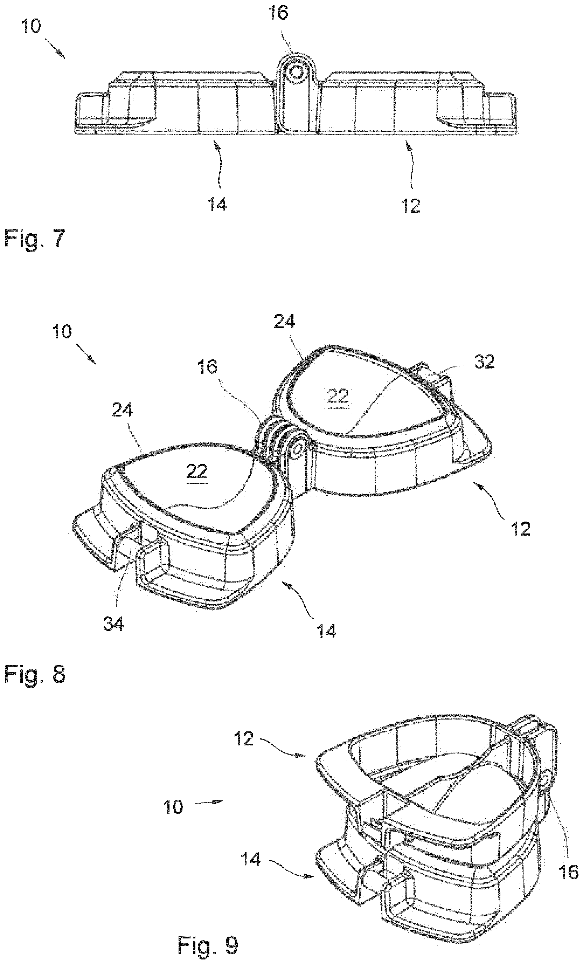

- Fig. 7 bis 9: zeigen die Vorrichtung dieser Ausführungsform in einem Zustand, in welchem das dritte Werkzeug entfernt worden ist.

Die Vorrichtung 10 zur Herstellung von Teigtaschen umfasst ein erstes Werkzeug 12 und ein zweites Werkzeug 14, die durch ein erstes Scharnier 16 klappbar miteinander verbunden sind, sowie ein drittes Werkzeug 18, das durch ein zweites Scharnier 20 klappbar mit dem ersten Werkzeug 12 verbunden ist. Wie im Folgenden noch näher beschrieben werden soll, ist das zweite Scharnier 20 lösbar, das heißt, das dritte Werkzeug 18 lässt sich vom ersten Werkzeug 12 abnehmen.

Die drei Werkzeuge 12, 14 und 18, ihre Form und ihr Zusammenspiel sollen im Folgenden näher ausgeführt werden.

Das erste Werkzeug 12 und das zweite Werkzeug 14 weisen jeweils eine Auskehlung 22 auf, die von einem umlaufenden Rand 24 umgeben ist. Die Ränder 24 des ersten Werkzeugs 12 und des zweiten Werkzeugs 14 haben eine identische Form und liegen jeweils in einer Ebene, so dass sie sich beim Zusammenklappen der Werkzeuge 12, 14 um die Achse des ersten Scharniers 16 aufeinanderlegen lassen. In dieser Stellung bilden die beiden Auskehlungen 22 der beiden Werkzeuge 12 und 14 einen gemeinsamen Hohlraum, der von den beiden Werkzeugen 12, 14 eingeschlossen wird.

Die beiden Werkzeuge 12 und 14 dienen zur Bildung einer gefüllten Teigtasche. Zu diesem Zweck wird eine Teigschicht in jede der Auskehlungen 22 des ersten Werkzeugs 12 und des zweiten Werkzeugs 14 eingebracht, und mit möglichst gleichmäßiger Dicke. Anschließend wird die Füllung auf die Teigschicht in einer der beiden Auskehlungen 22 eingebracht, beispielsweise in die Auskehlung 22 des zweiten Werkzeugs 14, und das andere (in diesem Fall erste) Werkzeug 12 wird darauf geklappt, um die Teigtasche zu schließen. Die aufeinander gelegten Ränder 24 verpressen dann die Teigtasche entlang ihres Umfangs.

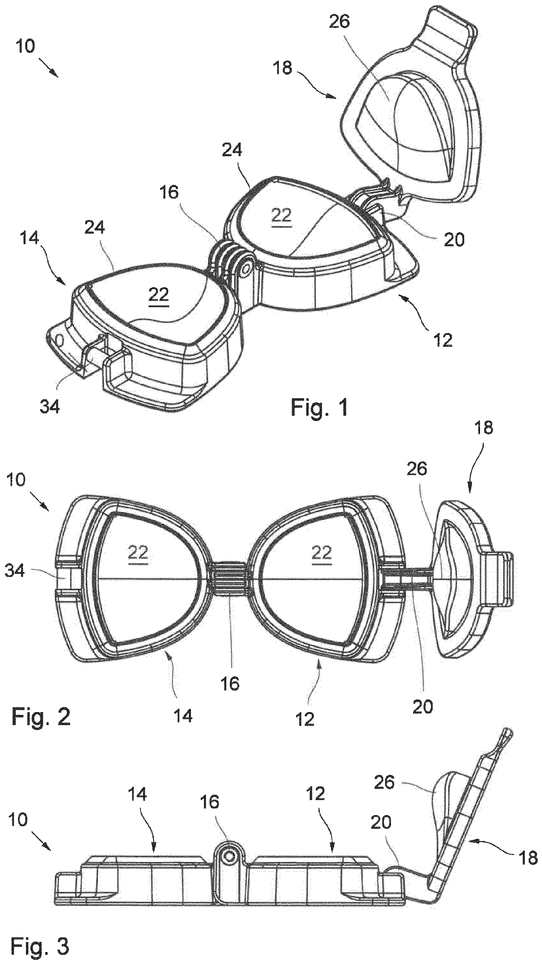

Es ist erwünscht, dass die Teigschicht in den Auskehlungen 22 eine vorbestimmte Dicke aufweist. Als Hilfsmittel zur Schaffung dieser bestimmten Dicke dient das dritte Werkzeug 18. Wie in Fig. 1 bis 3 deutlich erkennbar ist, weist das dritte Werkzeug 18 eine Aufwölbung 26 auf, die sich beim Klappen des dritten Werkzeugs 18 auf das erste Werkzeug 12 um die Achse des zweiten Scharniers 20 in die Auskehlung 22 des ersten Werkzeugs 12 absenkt. Die Form der Aufwölbung 26 entspricht im Wesentlichen derjenigen der Auskehlung 22 des ersten Werkzeugs 12, ist jedoch etwas kleiner bemessen, so dass die Aufwölbung 26 vollständig von dieser Auskehlung 22 aufgenommen werden kann.

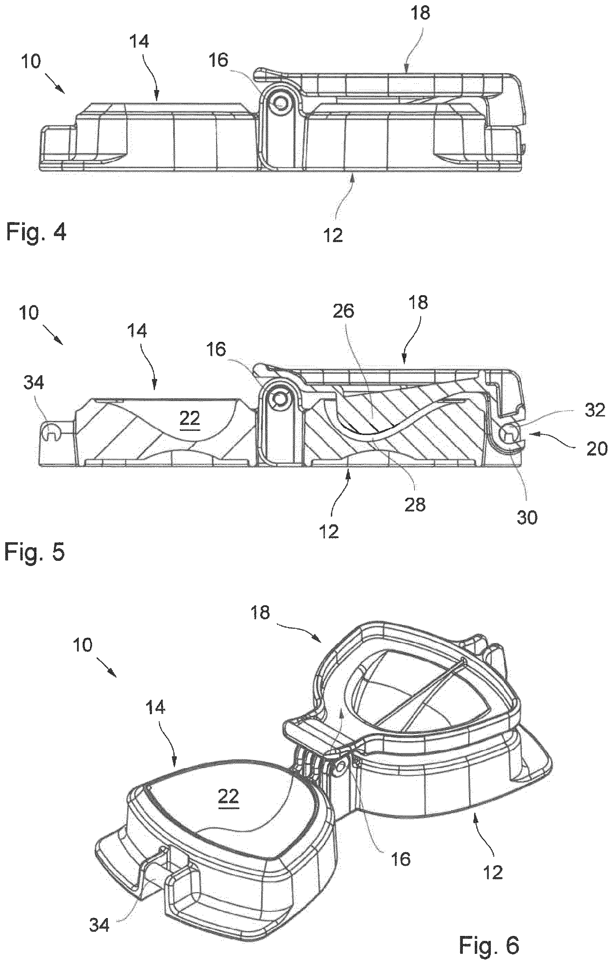

Der Zustand, in welchem das dritte Werkzeug 18 vollständig auf das erste Werkzeug 12 aufgelegt und auf dieses abgesenkt ist, ist in den Fig. 4, 5 und 6 dargestellt. Insbesondere zeigt Fig. 5 einen Längsschnitt durch die erfindungsgemäße Vorrichtung 10 entlang einer Mittelebene, die senkrecht zu den Achsen des ersten Scharniers 16 und des zweiten Scharniers 20 steht. Hier ist deutlich zu erkennen, dass in der Stellung, in welcher das dritte Werkzeug 18 vollständig auf das erste Werkzeug 12 geklappt ist, zwischen der Aufwölbung 26 und der Auskehlung 22 bzw. deren Oberfläche ein Zwischenraum 28 verbleibt. Dieser Zwischenraum 28 weist eine gleichförmige Höhe auf, und die Abstände zwischen der Aufwölbung 26 und der Auskehlung 22 sind an jedem Punkt des Zwischenraums 28 gleich.

Zur Auskleidung der Auskehlung 22 des ersten Werkzeugs 12 mit Teig wird in der Stellung in den Fig. 1 bis 3, in welcher das erste Werkzeug 12 und das dritte Werkzeug 18 sich zueinander in der geöffneten Stellung befinden, eine Teigmasse in geeigneter Menge in die Auskehlung 22 des ersten Werkzeugs 12 eingelegt und eventuell grob mit den Fingern angepresst. Anschließend wird das dritte Werkzeug 18 um die Achse des zweiten Scharniers 20 geschwenkt und auf das erste Werkzeug 12 abgesenkt, so dass die Aufwölbung 26 sich in die Auskehlung 22 ersten Werkzeugs 12 absenkt und von dieser aufgenommen wird, wie in Fig. 4, 5 und 6 dargestellt. Hierzu muss ein leichter Druck ausgeübt werden, um die Teigmasse in dem entstehenden Zwischenraum 28 zu verteilen. Aufgrund der gleichmäßigen Höhe des Zwischenraums 28 bildet sich bei der hier gezeigten Ausführungsform eine gleichmäßige Teigschicht in dem Zwischenraum zwischen der Aufwölbung 26 und der Auskehlung 22 des ersten Werkzeugs 12 aus.

Anschließend kann das dritte Werkzeug 18 wieder angehoben werden, so dass im ersten Werkzeug 12 lediglich die gleichförmig dünne Teigschicht verbleibt.

Wie bereits erwähnt, ist bei der vorliegenden Ausführungsform der vorliegenden Erfindung das zweite Scharnier 20 lösbar. In Fig. 5 sichtbar, wird es durch zwei voneinander lösbare Scharnierteile gebildet. Das erste Scharnierteil ist ein Haken 30, der einstückig am dritten Werkzeug 18 angeformt ist. Der zweite Scharnierteil wird durch eine Scharnierachse 32 gebildet, die einstückig am ersten Werkzeug 12 ausgeformt ist und parallel zur Scharnierachse des ersten Scharniers 16 steht.

Das zweite Scharnier 20 lässt sich zusammensetzen, indem der Haken 30 in die Scharnierachse 32 eingehakt wird. Dies ist in der geöffneten Stellung des dritten Werkzeugs 18 in Bezug auf das erste Werkzeug 12 möglich, wie in den Fig. 1 bis 3 dargestellt. Im zusammengesetzten Zustand des zweiten Scharniers 20 bildet dieses eine mechanische Führung zum Schwenken des dritten Werkzeugs 18 in Bezug auf das erste Werkzeug 12.

Bei der vorliegenden Ausführungsform ist überdies das zweite Werkzeug 14 identisch mit dem ersten Werkzeug 12 ausgebildet. Es weist somit ebenfalls eine Scharnierachse 34 auf, in welche sich der Haken 30 des dritten Werkzeugs 18 einhaken lässt. Der Bewegungsablauf ist dann der gleiche wie am ersten Werkzeug 12, das heißt, nach dem Einhaken lässt sich das dritte Werkzeug 18 auf das zweite Werkzeug 14 absenken, so dass die Aufwölbung 26 von der Auskehlung 22 im zweiten Werkzeug 14 aufgenommen wird. Zweckmäßigerweise wird auch in diesem Fall ein Zwischenraum 28 mit gleichmäßiger Höhe zwischen der Aufwölbung 26 und der Auskehlung 22 im zweiten Werkzeug 14 ausgebildet. Die Anordnung ist dann genau spiegelbildlich wie in Fig. 5 dargestellt.

Somit lässt sich nach Ausbildung einer gleichförmigen Teigschicht im ersten Werkzeug 12, wie oben beschrieben, das dritte Werkzeug 18 durch Lösen des Hakens 30 von der Scharnierachse 32 abnehmen und an der Scharnierachse 34 des zweiten Werkzeugs 14 einhaken, so dass der Vorgang der Bildung einer gleichförmigen Teigschicht im zweiten Werkzeug 14 wiederholt wird.

Da das dritte Werkzeug 18 an jedem der beiden ersten und zweiten Werkzeuge 12 und 14 einhakbar ist, lässt es sich dazu benutzen, in jeder der beiden Auskehlungen 22 der beiden Werkzeuge 12 und 14 eine Teigschicht mit vorgegebener Dicke auszubilden.

Abweichend von der hier dargestellten Ausführungsform kann das dritte Werkzeug 18 außer der Aufwölbung 26 noch eine weitere Aufwölbung aufweisen, insgesamt zwei Aufwölbungen, die in den jeweiligen Auskehlungen 22 des ersten Werkzeugs 12 und des zweiten Werkzeugs 14 gesenkt werden, wenn das dritte Werkzeug 18 auf diese im aufgeklappten Zustand der beiden Werkzeuge 12 und 14 gesenkt wird. Das heißt, dass gleichzeitig mit dem Absenken der Aufwölbung 26 in die Auskehlung 22 im ersten Werkzeug ein Absenken der zusätzlichen Aufwölbung in die Auskehlung 22 im zweiten Werkzeug 14 stattfindet. Hierdurch lässt sich die Teigmasse in gleichmäßiger Dicke gleichzeitig in beiden Werkzeugen 12 und 14 in einem einzigen Arbeitsgang gleichmäßig verteilen.

## Patentansprüche

1. Vorrichtung (10) zur Herstellung von Teigtaschen, umfassend ein erstes Werkzeug (12) und ein zweites Werkzeug (14), die jeweils eine Auskehlung (22) aufweisen und durch ein erstes Scharnier (16) aufeinander klappbar verbunden sind, **gekennzeichnet durch** ein drittes Werkzeug (18), das eine Aufwölbung (26) aufweist, die von der Auskehlung (22) aufgenommen wird, wenn das dritte Werkzeug (18) auf das erste Werkzeug (12) abgesenkt wird.

2. Vorrichtung gemäß Anspruch 1, **dadurch gekennzeichnet, dass** das dritte Werkzeug (18) mit dem ersten Werkzeug (12) durch zumindest ein zweites Scharnier (20) klappbar verbunden oder zu verbinden ist und in der geöffneten Stellung des ersten Werkzeugs (12) und des zweiten Werkzeugs (14) auf das erste Werkzeug (12) klappbar ist.

3. Vorrichtung gemäß Anspruch 2, **dadurch gekennzeichnet, dass** das zweite Scharnier (20) zwei voneinander lösbare Scharnierteile aufweist, von denen ein erstes Scharnierteil (30) am dritten Werkzeug (18) und ein zweites Scharnierteil (32) am ersten Werkzeug (12) angebracht ist.

4. Vorrichtung gemäß Anspruch 3, **dadurch gekennzeichnet, dass** jeweils eines der ersten und zweiten Scharnierteile einen Haken (30) umfasst und das jeweils andere Scharnierteil eine Scharnierachse (32) umfasst, in die der Haken (30) einhakbar ist.

5. Vorrichtung gemäß Anspruch 3 oder 4, **dadurch gekennzeichnet, dass** das zweite Werkzeug (14) ein drittes Scharnierteil (34) umfasst, das sich mit dem ersten Scharnierteil (30) zur Bildung eines dritten Scharniers lösbar verbinden lässt.

6. Vorrichtung gemäß Anspruch 5, **dadurch gekennzeichnet, dass** das zweite Scharnierteil (32) und das dritte Scharnierteil (34) identisch ausgebildet sind.

7. Vorrichtung gemäß einem der vorhergehenden Ansprüche, **dadurch gekennzeichnet, dass** das erste Werkzeug (12) und das zweite Werkzeug (14) identisch ausgebildet sind.

8. Vorrichtung gemäß einem der vorhergehenden Ansprüche, **dadurch gekennzeichnet, dass** die Aufwölbung (26) eine Form aufweist, die der Auskehlung (22) des ersten Werkzeugs (12) entspricht, jedoch kleiner bemessen ist, so dass sie in der Stellung, in welcher das dritte Werkzeug (18) auf das erste Werkzeug (12) abgesenkt ist, von der Auskehlung (22) des ersten Werkzeugs (12) aufgenommen wird und zwischen der Aufwölbung (26) und der Auskehlung (22) ein Zwischenraum (28) verbleibt.

9. Vorrichtung gemäß Anspruch 8, **dadurch gekennzeichnet, dass** der Zwischenraum (28) eine gleichmäßige Höhe aufweist.

10. Vorrichtung gemäß einem der vorhergehenden Ansprüche, **dadurch gekennzeichnet, dass** die Auskehlung (22) des ersten Werkzeugs (12) und/oder die Auskehlung (22) des zweiten Werkzeugs (14) von einem Pressrand (24) umgeben ist.

11. Vorrichtung gemäß einem der vorhergehenden Ansprüche, **dadurch gekennzeichnet, dass** das dritte Werkzeug (18) zwei Aufwölbungen aufweist, die von den jeweiligen Auskehlungen des ersten Werkzeugs (12) und des zweiten Werkzeugs (14) aufgenommen werden, wenn das dritte Werkzeug (18) auf das erste Werkzeug (12) und das zweite Werkzeug (14) in der geöffneten Stellung des ersten Werkzeugs (12) und des zweiten Werkzeugs (14) abgesenkt wird.
